# EUROPÄISCHE PATENTSCHRIFT

(11) **EP 1 443 121 B1**
(45) Veröffentlichungstag und Bekanntmachung des Hinweises auf die Patenterteilung: **11.01.2006**
(21) Anmeldenummer: 04001765.9
(22) Anmeldetag: 28.01.2004
(51) Int. Cl.: C22B 34/12, C01G 23/053

(54) **Verfahren zur Neutralisation und Wiederverwendung von bei der Herstellung von Titandioxid nach dem Sulfatverfahren entstehenden Aufschlussrückständen**
Process of neutralizing and recycling digested residues from the sulphate process production of dioxide of titanium
Procédé de neutralisation et de recyclage de residus de digestion provenant du procédé de sulfate pour la production de dioxyde de titane

(30) Priorität: 28.01.2003 DE 10303287
(43) Veröffentlichungstag der Anmeldung: 04.08.2004
(73) Patentinhaber: Sachtleben Chemie GmbH, 47198 Duisburg (DE)
(72) Erfinder: Kretschmer, Matthias, Dr., 47445 Moers (DE); Ronkholz, Horst, 47800 Krefeld (DE); Wefers, Wilhelm-Friedrich, 47228 Duisburg (DE); Kuna, Günter, 40596 Düsseldorf (DE); Wagner, Hartmut, Dr., 47441 Moers (DE)
(74) Vertreter: Uppena, Franz

(56) Entgegenhaltungen:
- EP-A- 0 313 715
- EP-A- 0 659 688
- DE-A- 19 806 471
- "THE SULPHATE PROCESS - HERE TO STAY" SULPHUR, THE BRITISH SULPHUR CO., LONDON, GB, Nr. 242, 1996, Seiten 16-17, XP000553592 ISSN: 0039-4890

## Beschreibung

Die Erfindung betrifft ein Verfahren zur Neutralisation und zur Wiederverwendung von Aufschlussrückständen, die bei der Herstellung von Titandioxid nach dem Sulfatverfahren entstehen.

Bei der Herstellung von Titandioxid nach dem Sulfatverfahren werden titandioxidhaltige Rohstoffe (Schlacke, Ilmenit) getrocknet und gemahlen und anschließend mit konzentrierter Schwefelsäure aufgeschlossen. Die Reaktion zwischen den Rohstoffen und der konzentrierten Schwefelsäure wird chargenweise in ausgemauerten Reaktionskesseln durchgeführt. Bei der Aufschlussreaktion werden nahezu alle in den Rohstoffen vorhandene Elementoxide, die mit Schwefelsäure reagieren, in die entsprechenden Metallsulfate umgewandelt. Nach der Reaktion verbleibt eine feste Masse (Aufschlusskuchen), die mit Wasser und/oder verdünnter Schwefelsäure gelöst wird.

Die Aufschlusslösung wird durch Sedimentations- und Filtrationsprozesse vollständig von den ungelösten Bestandteilen (Aufschlussrückstände, Gangart) befreit. Im weiteren Prozess wird aus der feststofffreien Aufschlusslösung durch Hydrolyse eine Metatitansäuresuspension hergestellt. Die Metatitansäure wird nach Waschung, Bleichung und gegebenenfalls Salzbehandlung sowie Filtration in einem Drehrohrofen kalziniert.

Die Aufschlussrückstände, die in Abhängigkeit von den eingesetzten Rohstoffen im wesentlichen aus Titandioxid, Siliziumdioxid, Aluminium- und Eisenoxid bestehen, werden üblicherweise mit verdünnter Schwefelsäure angemaischt und erneut durch einen Sedimentationsprozess abgetrennt. Dieser Verfahrensschritt entfernt weitgehend - jedoch nicht vollständig - die noch den Aufschlussrückständen anhaftenden löslichen TiO₂-Bestandteile.

In einem weiteren Schritt werden die so gewaschenen Aufschlussrückstände mittels einer Kammerfilterpresse oder eines Drehfilters filtriert, mit Wasser angemaischt und nach Neutralisation mit üblicherweise Calciumhydroxidsuspension und erneuter Filtration deponiert.

Von Nachteil bei diesem Vorgehen ist in ökonomischer Hinsicht die Vielzahl der Apparate und Verfahrensschritte und in ökologischer Hinsicht die Vergrößerung des Abfall- bzw. Deponievolumens durch das bei der Neutralisation entstehende Calciumsulfat (Gips). Weiterhin nachteilig ist der Mehrverbrauch an Neutralisationsmittel, der durch die dem Aufschlussrückstand anhaftende und nicht ausgewaschene Schwefelsäure bedingt ist. Ebenfalls problematisch sind die an den Aufschlussrückständen anhaftenden Metallsulfate. Zudem lässt sich das Gemisch aus Aufschlussrückständen und Gips nur ungenügend entwässern. Dies erschwert das Handling und den Transport, da dieses Gemisch Restfeuchten von deutlich über 20 % aufweist und sich zudem thixotrop verhält.

Der Aufschlussrückstand kann in Abhängigkeit von den eingesetzten Rohstoffen und der Ausbeute der Aufschlussreaktion noch 20 bis 60 % Titandioxid enthalten. Anstatt diesen Rückstand zu deponieren, ist es wünschenswert, den noch vorhandenen TiO₂-Gehalt nutzbar zu machen.

So wird in der DE 29 51 749 C2 ein Verfahren beschrieben, bei dem 5 bis 95 % eines titandioxidhaltigen Aufschlussrückstandes, der über Drehfiltration mit anschließender Waschung erhalten wurde, gemeinsam mit 95 bis 5 % feinteiliger Schlacke in Schwefelsäure mit einem Gehalt von > 86 % aufgeschlossen wird. In der DE 40 27 105 A1 wird ein Verfahren beschrieben, bei dem der Aufschlussrückstand mit konzentrierter Schwefelsäure unter Zufuhr von Energie z.B. in Schnecken, Drehrohren oder ähnlichen Apparaten aufgeschlossen wird.

Nachteil der beschriebenen Verfahren ist, dass die nach Drehfiltration und Waschung nicht weiter vorbehandelten Aufschlussrückstände wegen ihrer hohen Restfeuchte (z.B. 30 %) schwer handhabbar sind, für die Aufschlussreaktion höhere Schwefelsäurekonzentrationen und die Zufuhr von Energie erfordern und durch den Gehalt an anhaftender Schwefelsäure stark korrodierend wirken. Weiterhin reichem sich beim Wiedereinsatz größerer Mengen von Aufschlussrückstand die nicht mit Schwefelsäure umsetzbaren Bestandteile, insbesondere Siliziumdioxid, an.

Aufgabe der Erfindung ist es, die Nachteile des Standes der Technik zu überwinden und insbesondere ein Verfahren zur Neutralisation von bei der Herstellung von Titandioxid nach dem Sulfatverfahren entstehenden Aufschlussfückständen zu schaffen, bei dem gegenüber dem Stand der Technik der apparative Aufwand verringert wird, der Verbrauch an Neutralisationsmittel verringert wird, die an den Aufschlussrückständen anhaftende Schwefelsäure vollständig neutralisiert wird, die an den Aufschlussrückständen anhaftenden Metallsulfate vollständig ausgewaschen werden und die Masse des anfallenden Filterkuchens (Aufschlussrückstand) reduziert wird. Weiterhin soll das im Aufschlussrückstand enthaltende TiO₂ zum Teil wiedergewonnen werden.

Gelöst wird die Aufgabe dadurch, dass die bei dem Aufschluss von titandioxidhaltigen Rohstoffen mit Schwefelsäure anfallenden Aufschlussrückstände in einer Membrankammerfilterpresse filtriert werden und der die Aufschlussrückstände enthaltende Filterkuchen in der Membrankammerfilterpresse mit einer basisch reagierenden Lösung oder Suspension neutralisiert wird.

Überraschenderweise wurde gefunden, dass sich der Filterkuchen in der Membrankammerfilterpresse vollständig und reproduzierbar neutralisieren lässt; das heißt, in einem Filtrationsapparat wird nach der eigentlichen Filtration auch eine chemische Reaktion (Neutralisation) durchgeführt.

Bevorzugt wird die Neutralisation mit einer Alkalimetallhydroxidlösung oder einer Erdalkalimetallhydroxidsuspension durchgeführt. Besonders bevorzugt sind NaOH oder Ca(OH)₂. Die Konzentration der basisch reagierenden Lösung oder Suspension beträgt bevorzugt 0,1 bis 10 Gew.%, besonders bevorzugt 0,1 bis 4 Gew.-%.

In einer weiteren Ausführungsform des erfindungsgemäßen Verfahrens werden den titandioxidhaltigen Rohstoffen (z. B. Schlacke oder Ilmenit) die neutralisierten Aufschlussrückstände beigemischt und anschließend in bekannter Weise getrocknet, gemahlen und mit Schwefelsäure aufgeschlossen. Bevorzugt werden die Aufschlussrückstände den Rohstoffen in einem Anteil von 1 bis 10 Gew.-%, bezogen auf die Mischung aus Rohstoffen und Rückständen, zugemischt. Besonders bevorzugt ist ein Anteil von 2 bis 5 Gew.-%.

Überraschenderweise wurde gefunden, dass die Ausbeute eines Schlacke/Ilmenit-Gemisches, dem Aufschlussrückstände beigefügt wurde, bei gleichen Reaktionsbedingungen den gleichen Reaktionsverlauf und die gleiche TiO₂-Ausbeute bezogen auf den Gesamt-TiO₂-Gehalt der Ausgangsmischung hat, wie das Schlacke/Ilmenit-Gemisch ohne den Zusatz von Aufschlussrückständen. Dies bedeutet, dass die in dieser Form eingesetzten Aufschlussrückstände wie ein normaler Rohstoff gehandhabt und umgesetzt werden können. Dabei können auch Aufschlussrückstände eingesetzt werden, die nach einem bereits bekannten Neutralisationsschritt und nicht nach dem hier beschriebenen Neutralisationsschritt in einer Membranfilterkammerpresse gewonnen wurden.

Beispielhaft kann das erfindungsgemäße Verfahren folgendermaßen durchgeführt werden (ohne dass damit irgendwelche Einschränkungen verbunden sind):

Die titandioxidhaltigen Rohstoffe (Schlacke, Ilmenit) werden getrocknet und gemahlen und anschließend mit konzentrierter Schwefelsäure aufgeschlossen. Die nach der Reaktion verbleibende feste Masse (Aufschlusskuchen) wird mit Wasser und/oder verdünnter Schwefelsäure gelöst. Nach Sedimentation wird die Aufschlusslösung in einem Eindicker von der Gangart getrennt und in gewohnter Weise weiterverarbeitet. Der Eindickerunterlauf, also der Aufschlussrückstand, kann (zur Verbesserung der Pumpfähigkeit) mit verdünnter Schwefelsäure versetzt werden. Der Aufschlussrückstand wird anschließend in einer Membrankammerfilterpresse filtriert, gegebenenfalls gewaschen, bevorzugt mit verdünnter Natronlauge neutralisiert und gegebenenfalls trockengeblasen. Die Konzentration der Natronlauge beträgt bevorzugt 0,1 bis 10 Gew.-%, besonders bevorzugt 0,1 bis 4 Gew.-%. Der neutralisierte (getrocknete oder ungetrocknete) Aufschlussrückstand kann anschließend wieder dem Rohstoff zugefügt werden. Bevorzugt werden die Filtrate des Filtrations-, Neutralisations- und Waschprozesses vollständig in den Prozess zurückgeführt, z. B. werden die Filtrate zum Lösen des Aufschlusskuchens verwendet.

Das erfindungsgemäße Verfahren hat folgende Vorteile:
- Relativ zum Stand der Technik werden weniger Apparate verwendet.
- An den Aufschlussrückständen anhaftenden Metallsulfate werden vollständig ausgewaschen, was zu einer Minimierung der eluierbaren Anteile im Filterkuchen führt.
- Der Verbrauch an Neutralisationsmittel ist deutlich reduziert.
- Die an den Aufschlussrückständen anhaftende Schwefelsäure wird vollständig neutralisiert.
- Die Masse des anfallenden Filterkuchens wird reduziert und die Handlingeigenschaften des Filterkuchens werden verbessert.
- Die Aufschlussrückstande brauchen nicht vorbehandelt zu werden, wenn diese wieder den Rohstoffen zugesetzt werden. Auch kann das Gemisch aus Rohstoff und Aufschlussrückstand unter den üblichen Reaktionsbedingungen mit konzentrierter Schwefelsäure umgesetzt werden, wobei der TiO₂-Anteil des beigemischten Aufschlussrückstands ebenfalls mit der Schwefelsäure reagiert, so also die Gesamtausbeute des TiO₂-Gehaltes der Rohstoffe verbessert wird.

## Patentansprüche

1. Verfahren zur Herstellung von Titandioxid nach dem Sulfatverfahren, bei dem titanhaltige Rohstoffe mit Schwefelsäure aufgeschlossen werden und die bei dem Aufschluss von titandioxidhaltigen Rohstoffen mit Schwefelsäure anfallenden Aufschlussrückstände in einer Membrankammerfilterpresse filtriert werden, **dadurch gekennzeichnet, dass** der die Aufschlussrückstände enthaltende Filterkuchen in der Membrankammerfilterpresse mit einer basisch reagierenden Lösung oder Suspension neutralisiert wird.

2. Verfahren nach Anspruch 1, **dadurch gekennzeichnet, dass** die Neutralisation mit einer Alkalimetallhydroxidlösung oder einer Erdalkalimetallhydroxidsuspension durchgeführt wird.

3. Verfahren nach Anspruch 2, **dadurch gekennzeichnet, dass** die Neutralisation mit NaOH oder Ca(OH)₂ durchgeführt wird.

4. Verfahren nach einem der Ansprüche 1 bis 3, **dadurch gekennzeichnet, dass** die Konzentration der basisch reagierenden Lösung oder Suspension 0,1 bis 10 Gew.-% beträgt.

5. Verfahren nach Anspruch 4, **dadurch gekennzeichnet, dass** die Konzentration der basisch reagierenden Lösung oder Suspension 0,1 bis 4 Gew.-% beträgt.

6. Verfahren nach einem der Ansprüche 1 bis 5, **dadurch gekennzeichnet, dass** den titandioxidhaltigen Rohstoffen die neutralisierten Aufschlussrückstände beigemischt werden und dieses Rohstoffgemisch anschließend in bekannter Weise getrocknet, gemahlen und mit Schwefelsäure aufgeschlossen wird.

7. Verfahren nach Anspruch 6, **dadurch gekennzeichnet, dass** die Aufschlussrückstände den Rohstoffen in einem Anteil von 1 bis 10 Gew.-%, bezogen auf die Mischung aus Rohstoffen und Rückständen, zugemischt werden.

8. Verfahren nach Anspruch 7, **dadurch gekennzeichnet, dass** die Aufschlussrückstände den Rohstoffen in einem Anteil von 2 bis 5 Gew.-%, bezogen auf die Mischung aus Rohstoffen und Rückständen, zugemischt werden.

## Claims

1. A process for the manufacture of titanium dioxide by the sulfate method, wherein titanium-containing raw materials are digested with sulfuric acid and the residues obtained from the digestion of titanium-dioxide-containing raw materials with sulfuric acid are filtered in a membrane chamber filter press, **characterized in that** the filter cake containing the digestion residues in the membrane chamber filter press is neutralized with a solution or suspension that gives a basic reaction.

2. A process according to Claim 1, **characterized in that** the neutralization is carried out with an alkali metal hydroxide solution or an alkaline earth metal hydroxide suspension.

3. A process according to Claim 2, **characterized in that** the neutralization is carried out with NaOH or Ca(OH)₂.

4. A process according to one of Claims 1 to 3, **characterized in that** the concentration of the solution or suspension that gives a basic reaction is 0.1 to 10 wt.%.

5. A process according to Claim 4, **characterized in that** the concentration of the solution or suspension that gives a basic reaction is 0.1 to 4 wt.%.

6. A process according to one of Claims 1 to 5, **characterized in that** the neutralized digestion residues are mixed with the titanium dioxide-containing raw materials and this raw material mixture is then dried, ground and digested with sulfuric acid in known manner.

7. A process according to Claim 6, **characterized in that** the digestion residues are mixed with the raw materials in a proportion of 1 to 10 wt.%, based on the mixture of raw materials and residues.

8. A process according to Claim 7, **characterized in that** the digestion residues are mixed with the raw materials in a proportion of 2 to 5 wt.%, based on the mixture of raw materials and residues.

## Revendications

1. Procédé de préparation de dioxyde de titane selon le procédé au sulfate, dans lequel on attaque avec de l'acide sulfurique des matières premières contenant du dioxyde de titane et on sépare par filtration dans un filtre-presse à chambre à membrane, les résidus d'attaque formés lors de l'attaque des matières premières contenant du dioxyde de titane avec de l'acide sulfurique, **caractérisé en ce que** l'on neutralise le gâteau de filtration contenant les résidus d'attaque, présent dans le filtre-presse à chambre à membrane, avec une solution ou une suspension basique.

2. Procédé selon la revendication 1, **caractérisé en ce que** l'on réalise la neutralisation avec une solution d'hydroxyde de métal alcalin ou une suspension d'hydroxyde de métal alcalino-terreux.

3. Procédé selon la revendication 2, **caractérisé en ce que** l'on réalise la neutralisation avec NaOH ou Ca(OH)₂.

4. Procédé selon l'une quelconque des revendications 1 à 3, **caractérisé en ce que** la concentration de la solution ou suspension basique est de 0,1 à 10 % en poids.

5. Procédé selon la revendication 4, **caractérisé en ce que** la concentration de la solution ou suspension basique est de 0,1 à 4 % en poids.

6. Procédé selon l'une quelconque des revendications 1 à 5, **caractérisé en ce que** l'on ajoute les résidus d'attaque neutralisés aux matières première contenant du dioxyde de titane, puis on sèche et broie ce mélange matière première en opérant d'une manière connue, et on l'attaque avec de l'acide sulfurique.

7. Procédé selon la revendication 6, **caractérisé en ce que** l'on ajoute les résidus d'attaque aux matière premières en une proportion de 1 à 10 % en poids par rapport au mélange de matières premières et de résidus.

8. Procédé selon la revendication 7, **caractérisé en ce que** l'on ajoute les résidus d'attaque aux matières premières en une proportion de 2 à 5 % en poids par rapport au mélange des matières premières et des résidus.
